# EUROPÄISCHE PATENTSCHRIFT

(11) **EP 2 759 769 B1**
(45) Veröffentlichungstag und Bekanntmachung des Hinweises auf die Patenterteilung: **19.04.2017**
(21) Anmeldenummer: 14000061.3
(22) Anmeldetag: 09.01.2014
(51) Int. Cl.: F23J 3/02, F23G 5/48, F23M 5/02, F23M 5/08, F23J 15/02, F23M 11/04, F23N 5/00, F23J 7/00

(54) **Verfahren zum Führen einer Leitung in einer Verbrennungsanlage sowie Vorrichtung mit einer derartigen Leitung**
Method for guiding a conduit in a combustion plant and device with such a conduit
Procédé de guidage d'une conduite dans un incinérateur et dispositif doté d'une telle conduite

(30) Priorität: 23.01.2013 DE 102013001092
(43) Veröffentlichungstag der Anmeldung: 30.07.2014
(73) Patentinhaber: MARTIN GmbH für Umwelt- und Energietechnik, 80807 München (DE)
(72) Erfinder: Weber, Toralf, 82275 Emmering (DE); Martin, Johannes, 81675 München (DE)
(74) Vertreter: Castell, Klaus

(56) Entgegenhaltungen:
- EP-A2- 1 411 298
- EP-A2- 2 754 961
- DD-A1- 203 899
- DE-B4- 19 781 750
- GB-A- 2 263 330
- US-A1- 2012 042 970

## Beschreibung

Die Erfindung betrifft ein Verfahren zum Führen einer Leitung in einer Verbrennungsanlage und eine Vorrichtung mit einer Leitung. Insbesondere betrifft die Erfindung ein Verfahren zum Führen einer Leitung in einer Verbrennungsanlage, bei dem die Leitung von einem Keramikbauteil umgeben ist, das von mindestens zwei gegenüberliegenden Seiten von Rauchgas angeströmt wird, wobei zwischen Leitung und Keramikbauteil ein Schutzfluid zugeführt wird, sowie eine Vorrichtung mit einer derartigen Leitung.

In Verbrennungsanlagen entstehen Temperaturen von mehreren Hundert Grad Celsius und insbesondere bei Kesselanlagen ist es sinnvoll, die Temperaturen im Bereich der Wärmeerzeugung möglichst hoch zu halten, um an der Kesselanlage einen hohen Wirkungsgrad zu ermöglichen. Zur Optimierung der Anlagen ist es sinnvoll, nicht nur an den Anlagenwänden sondern auch im mittleren Bereich des Wärmeerzeugers, wie insbesondere im Feuerraum und den Rauchgaszügen nicht nur Wärmetauscher sondern auch Messeinrichtungen, Gasentnahme- oder Fluidzuführeinrichtungen vorzusehen. In Folge der extrem hohen Temperaturen und der insbesondere bei der Verbrennung fester Brennstoffe aufgrund der aus dem Brennbett ausgetragenen Stäube entstehenden Ablagerungen hätten derartige von mindestens zwei gegenüberliegenden Seiten von Rauchgas angeströmte Einrichtungen nur eine geringe Lebensdauer. Selbst wenn die Leitungen von einem Keramikbauteil umgeben werden, ist dies für viele Anwendungen kein ausreichender Schutz, sodass insbesondere die Zuführung von Medien in den Feuerraum oder die Rauchgaszüge auf Düsen an den Wänden der Verbrennungsanlage beschränkt ist.

Ein gattungsgemäßes Verfahren ist aus der EP 1 411 298 A2 bekannt. Hier wird ein Schutzfluid in einer Sonde geführt, um die Sonde zu kühlen. Die DE 197 81 750 B4 zeigt eine Injektionslanze zum Eindüsen von Luft und Ammoniak.

Der Erfindung liegt die Aufgabe zu Grunde, ein gattungsgemäßes Verfahren für den Einsatz als Eindüsungs- und Entnahmerohr in Kesselanlagen weiterzuentwickeln und eine gattungsgemäße Vorrichtung für diesen Einsatz weiter zu entwickeln.

Diese Aufgabe wird verfahrensmäßig mit den Merkmalen des Patentanspruchs 1 gelöst.

Da das Schutzfluid an der heißesten Stelle des Keramikbauteils zugeführt wird, kann eine besonders gute Kühlfunktion erzielt werden. Außerdem wird das Schutzfluid in einem unteren Bereich des Keramikbauteils zugeführt, da es sich dann dort erwärmt und im Keramikbauteil aufsteigt. Das Schutzfluid zwischen Leitung und Keramikbauteil schränkt die Wärmeübertragung ein und kann als strömendes Fluid kühlen, wenn kontinuierlich Fluid nachgeführt wird.

Die zu schützende Leitung kann dabei ein Rohr oder ein Schlauch sein. Die Leitung kann jedoch auch eine elektrische Leitung sein, die beispielsweise zu einer Messeinrichtung führt.

Das Schutzfluid kann eine Flüssigkeit, ein Dampf oder ein Gas sein. Vorzugsweise wird als Schutzfluid Luft verwendet. Insbesondere wenn das Keramikbauteil nicht vollständig dicht ist oder Teile im Keramikbauteil gekühlt werden sollen, ist es vorteilhaft, wenn kontinuierlich Luft zugeführt wird, sodass zumindest ein geringer Überdruck im Keramikbauteil gegenüber der das Keramikbauteil umgebenden Atmosphäre gewährleistet ist.

Um ein Fluid in die das Keramikbauteil umgebende Atmosphäre abgeben zu können, dort Gase zu entnehmen oder Temperaturen zu messen, wird vorgeschlagen, dass die Leitung durch das Schutzfluid und das Keramikbauteil geführt wird. Dabei kann eine Bohrung oder eine andere Öffnung im Keramikbauteil als Teil der Leitung dienen.

Eine besonders bevorzugte Verfahrensvariante sieht vor, dass in der Leitung ein Medium für die Rauchgasentstickung geführt wird. Dies ermöglicht es beispielweise eine Ammoniak- oder Harnstoffverbindung an beliebigen Stellen im Feuerraum oder in den Rauchgaszügen und insbesondere auch in verschiedenen Höhen dem Rauchgas zuzugeben. Dies wird vorzugsweise durch mehrere Leitungen und Düsen in unterschiedlichen Höhen im Keramikbauteil erzielt.

Die für die Zuführung eines Fluids bereitgestellten Leitungen können auch für die Entnahme einer Gasprobe verwendet werden oder es werden weitere Leitungen am Keramikbauteil für die Entnahme von Gasproben bereitgestellt.

Die Temperatur in einem Schutzfluidraum kann durch die Temperatur des zugeführten Schutzfluids oder eine geregelte Temperatur von im Schutzfluidraum angeordneten Wärmetauscherrohren eingestellt werden.

Vorrichtungsmäßig wird die der Erfindung zugrunde liegende Aufgabe mit einer Vorrichtung mit den Merkmalen des Patentanspruchs 12 gelöst.

Es ist vorteilhaft, wenn die Leitung durch den Schutzfluidraum und durch das Keramikbauteil führt, wobei die Leitung entweder im Keramikbauteil geführt werden kann oder eine Bohrung bzw. eine andere Öffnung im Keramikbauteil als Teil der Leitung verwendet wird.

Um das Schutzfluid an eine spezielle Stelle im Keramikbauteil zu führen, ist im Keramikbauteil eine Schutzfluidleitung angeordnet ist, die sich durch das Keramikbauteil erstreckt. Diese Schutzfluidleitung führt senkrecht durch das Keramikbauteil bis in einen unteren Bereich des Keramikbauteils, um dort das Schutzfluid zuzuführen und zwischen Schutzfluidleitung und Keramikbauteil aufsteigen zu lassen.

Um in den Feuerraum oder die Rauchgaszüge ein Gas oder eine Flüssigkeit einzubringen, wird vorgeschlagen, dass das Keramikbauteil eine und vorzugsweise mehrere Düsen aufweist. In entsprechender Weise wird für die Temperaturmessung vorgeschlagen, dass das Keramikbauteil eine und vorzugsweise mehrere Temperaturmesseinrichtungen aufweist.

Wenn das Schutzfluid ein Gas wie insbesondere Luft ist, ist es vorteilhaft, wenn die Schutzfluidzuführung ein Gebläse aufweist.

Der Schutzfluidraum weist mindestens ein Wärmetauscherrohr auf. Vorzugsweise ist auch dieses Wärmetauscherrohr von einem Schutzfluidraum umgeben, sodass das Wärmetauscherrohr wie die übrigen Leitungen durch das Schutzfluid geschützt ist. Das Wärmetauscherrohr kann auch dazu verwendet werden, eine gewünschte Temperatur im Keramikbauteil einzustellen.

Vor allem wenn am oder im Keramikbauteil Messeinrichtungen wie insbesondere Temperaturmesseinrichtungen, Gasanalysatoren oder Entnahmeeinrichtungen vorgesehen sind, ist es vorteilhaft, wenn der Schutzfluidraum Kabel für diese Messeinrichtungen aufweist.

Ein Ausführungsbeispiel einer Vorrichtung mit Leitungen in einem Keramikbauteil ist in der Zeichnung dargestellt und wird im Folgenden näher beschrieben.

Es zeigt
- Figur 1: schematisch einen Schnitt durch einen Bereich einer Feuerungsanlage mit einem Keramikbauteil,

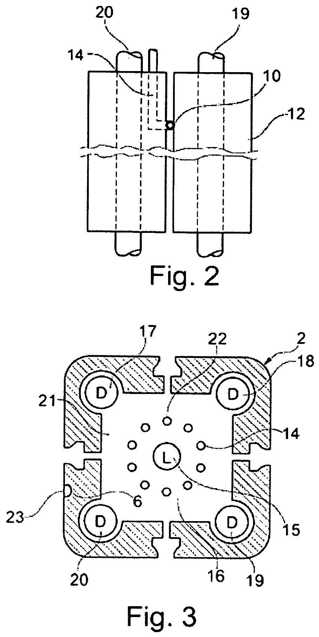

- Figur 2: eine vergrößerte Ansicht eines Details des Keramikbauteils und
- Figur 3: einen Schnitt durch das in Figur 2 gezeigte Keramikbauteil.

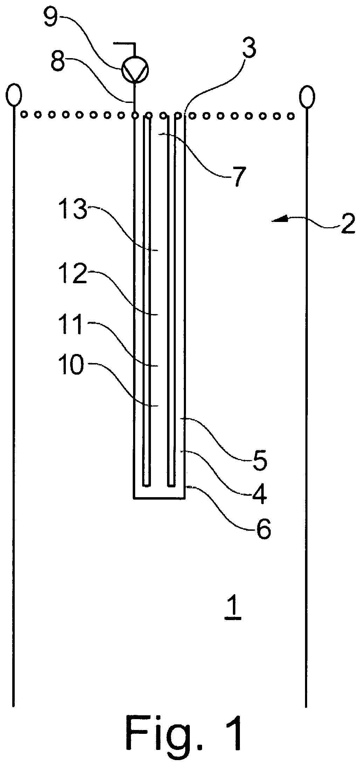

In dem in Figur 1 schematisch gezeigten Feuerraum 1 ist ein Keramikbauteil 2 so angeordnet, dass es an der Decke 3 des Feuerraums im Rauchgaszug hängt. Dieses Keramikbauteil 2 besteht aus mehreren Keramikelementen 4, 5, die übereinander angeordnet sind und eine hohle Stange bilden. Das unterste Keramikelement 6 bildet einen im Wesentlichen gasdichten Abschluss und das oberste Keramikelement 7 weist eine Schutzfluidzuführung 8 mit einem Gebläse 9 auf. Mehrere Keramikelemente 5 weisen Düsen 10 bis 13 auf, die jeweils mit einer Leitung 14 in Verbindung stehen.

Das Keramikbauteil, das frei im Rauchgaszug 1 hängt, ist somit von allen Seiten mit Ausnahme der Seite, an der das Keramikbauteil 2 aufgehängt ist, von Rauchgas angeströmt. Die Keramikelemente 4, 5, 6, 7 können lose aufeinander gestapelt sein oder mit Mörtel verbunden sein.

Innerhalb dieser Keramikelemente ist eine Schutzfluidleitung 15 angeordnet, die über die Schutzfluidzuführung und das Gebläse 9 mit Luft versorgt wird. Die Schutzfluidleitung 15 erstreckt sich durch alle Keramikelemente 7, 4, 5 bis zum untersten Keramikelement 6, wo das Schutzfluid aus der Schutzfluidleitung 15 austritt und im Schutzfluidraum 16 aufsteigt.

Darüber hinaus sind im Schutzfluid 16 innerhalb des Keramikbauteils 2 Wärmetauscherrohre 17 bis 20 angeordnet, die ebenfalls von einem Schutzfluid 21 umströmt sind. Kabel 22 sind im Schutzfluidraum 16 längs des Keramikbauteils 2 geführt, um Messeinrichtungen wie beispielsweise eine Temperaturmesseinrichtung 23 mit einer Auswerteeinrichtung (nicht gezeigt) zu verbinden.

## Patentansprüche

1. Verfahren zum Führen einer Leitung (14) in einer Verbrennungsanlage, bei dem die Leitung (14) von einem Keramikbauteil (2) umgeben ist, das von mindestens zwei gegenüber liegenden Seiten von Rauchgas angeströmt wird, wobei zwischen Leitung (14) und Keramikbauteil (2) ein Schutzfluid (21) in einem Schutzfluidraum (16) zugeführt wird, das Schutzfluid (21) durch eine im Keramikbauteil (2) angeordnete Schutzfluidleitung (15), die sich durch das Keramikbauteil (2) erstreckt und senkrecht durch das Keramikbauteil (2) bis in einen unteren Bereich des Keramikbauteils (2) führt, dort zugeführt wird und zwischen Schutzfluidleitung (15) und Keramikbauteil (2) aufsteigt, ***dadurch gekennzeichnet, dass*** der Schutzfluidraum (16) mindestens ein Wärmetauscherrohr (17 - 20) aufweist.

2. Verfahren nach Anspruch 1, ***dadurch gekennzeichnet, dass*** das Schutzfluid (21) an der heißesten Stelle des Keramikbauteils (2) oder an mehreren Stellen über die gesamte Bauhöhe des Keramikbauteils (2) zugeführt wird.

3. Verfahren nach Anspruch 1 oder 2, ***dadurch gekennzeichnet, dass*** das Keramikbauteil (2) frei in einem Rauchgaszug (1) hängt, so dass es von allen Seiten mit Ausnahme der Seite, an der es aufgehängt ist, von Rauchgas angeströmt ist.

4. Verfahren nach einem der vorhergehenden Ansprüche, ***dadurch gekennzeichnet, dass*** die Leitung (14) ein Rohr oder Schlauch ist.

5. Verfahren nach einem der Ansprüche 1 bis 3, ***dadurch gekennzeichnet*, *dass*** die Leitung (14) eine elektrische Leitung ist.

6. Verfahren nach einem der vorhergehenden Ansprüche, ***dadurch gekennzeichnet*, *dass*** das Schutzfluid (21) ein Gas, vorzugsweise Luft ist.

7. Verfahren nach einem der vorhergehenden Ansprüche, ***dadurch gekennzeichnet*, *dass*** das Schutzfluid (21) an mehreren Stellen des Keramikbauteils (2) zugeführt wird.

8. Verfahren nach einem der vorhergehenden Ansprüche, ***dadurch gekennzeichnet*, *dass*** die Leitung (14) durch das Schutzfluid (21) und das Keramikbauteil (2) geführt wird.

9. Verfahren nach einem der vorhergehenden Ansprüche, ***dadurch gekennzeichnet*, *dass*** in der Leitung (14) ein Medium für die Rauchgasentstickung geführt wird.

10. Verfahren nach einem der vorhergehenden Ansprüche, ***dadurch gekennzeichnet*, *dass*** über die Leitung (14) eine Gasprobe entnommen wird.

11. Verfahren nach einem der Ansprüche 1 bis 10, ***dadurch gekennzeichnet*, *dass*** die Temperatur in einem Schutzfluidraum (16) durch die Temperatur des zugeführten Schutzfluids oder eine geregelte Temperatur von den im Schutzfluidraum (16) angeordneten Wärmetauscherrohren (17-20) eingestellt wird.

12. Vorrichtung mit einer Leitung (14), wobei die Vorrichtung ein Keramikbauteil (2) umfasst, welches die Leitung umgibt, und wobei das Keramikbauteil von mindestens zwei gegenüber liegenden Seiten von Rauchgas anströmbar ist, wobei zwischen Leitung (14) und Keramikbauteil (2) ein Schutzfluidraum (16) vorgesehen ist, wobei das Keramikbauteil (2) frei in einem Rauchgaszug (1) hängen kann, so dass es von allen Seiten mit Ausnahme der Seite, an der es aufhängbar ist, von Rauchgas anströmbar ist, und der Schutzfluidraum (16) eine Schutzfluidzuführung (8) und eine Schutzfluidleitung (15) aufweist, die sich durch das Keramikbauteil (2) erstreckt, um das Schutzfluid (21) an der heißesten Stelle des Keramikbauteils (2) oder an mehreren Stellen über die gesamte Bauhöhe des Keramikbauteils (2) derart zuzuführen, dass das Schutzfluid (21) zwischen Schutzfluidleitung (15) und Keramikbauteil (2) aufsteigt, ***dadurch gekennzeichnet*, *dass*** der Schutzfluidraum (16) mindestens ein Wärmetauscherrohr (17 - 20) aufweist.

13. Vorrichtung nach Anspruch 12, ***dadurch gekennzeichnet*, *dass*** die Leitung (14) durch den Schutzfluidraum (16) und durch das Keramikbauteil (2) führt.

14. Vorrichtung nach einem der Ansprüche 12 oder 13, ***dadurch gekennzeichnet*, *dass*** das Keramikbauteil (2) eine und vorzugsweise mehrere Düsen (10 - 13) aufweist.

15. Vorrichtung nach einem der Ansprüche 12 bis 14, ***dadurch gekennzeichnet*, *dass*** das Keramikbauteil (2) eine und vorzugsweise mehrere Temperaturmesseinrichtungen (23) aufweist.

16. Vorrichtung nach einem der Ansprüche 12 bis 15, ***dadurch gekennzeichnet*, *dass*** die Schutzfluidzuführung (8) ein Gebläse (9) aufweist.

17. Vorrichtung nach einem der Ansprüche 12 bis 16, ***dadurch gekennzeichnet*, *dass*** der Schutzfluidraum (16) Kabel (22) für Messeinrichtungen aufweist.

## Claims

1. A method for guiding a conduit (14) in an incineration plant, in which the conduit (14) is surrounded by a ceramic component (2) onto which flue gas flows from at least two opposite sides, wherein a protective fluid is supplied to a protective fluid compartment (16) between the conduit (14) and the ceramic component (2), the protective fluid (21) being supplied thereto through a protective fluid conduit (15) disposed in the ceramic component (2) and extending through the ceramic component (2) and running vertically through the ceramic component (2) into a lower region of the ceramic component (2) and rising between the protective fluid conduit (15) and the ceramic component (2), ***characterized in that*** the protective fluid compartment (16) comprises at least one heat exchange pipe (17-20).

2. The method as claimed in claim 1, ***characterized in that*** the protective fluid (21) is supplied at the hottest point of the ceramic component (2) or at a plurality of points over the overall height of the ceramic component (2).

3. The method as claimed in claim 1 or claim 2, ***characterized in that*** the ceramic component (2) is suspended freely in a flue gas stack (1) so that flue gas flows onto it from all sides with the exception of the side on which it is suspended.

4. The method as claimed in one of the preceding claims, ***characterized in that*** the line (14) is a pipe or hose.

5. The method as claimed in one of claims 1 to 3, ***characterized in that*** the conduit (14) is an electrical conduit.

6. The method as claimed in one of the preceding claims, ***characterized in that*** the protective fluid (21) is a gas, preferably air.

7. The method as claimed in one of the preceding claims, ***characterized in that*** the protective fluid (21) is supplied at a plurality of points of the ceramic component (2).

8. The method as claimed in one of the preceding claims, ***characterized in that*** the conduit (14) is run through the protective fluid (21) and the ceramic component (2).

9. The method as claimed in one of the preceding claims, ***characterized in that*** a medium for flue gas denitrification is conveyed in the conduit (14).

10. The method as claimed in one of the preceding claims, ***characterized in that*** a gas sample is removed via the conduit (14).

11. The method as claimed in one of claims 1 to 10, ***characterized in that*** the temperature in a protective fluid compartment (16) is set by means of the temperature of the supplied protective fluid or a controlled temperature of the heat exchanger pipes (17-20) disposed in the protective fluid compartment (16).

12. A device having a conduit (14), wherein the device comprises a ceramic component (2) which surrounds the conduit, and wherein flue gas can flow onto the ceramic component from at least two opposite sides, wherein a protective fluid compartment (16) is provided between the conduit (14) and the ceramic component (2), wherein the ceramic component (2) can be freely suspended in a flue gas stack (1), so that flue gas can flow onto it from all sides with the exception of the side on which it can be suspended, and the protective fluid compartment (16) comprises a protective fluid duct (8) and a protective fluid conduit (15) which extends through the ceramic component (2) in order to supply the protective fluid (21) to the hottest point of the ceramic component (2) or to a plurality of points over the overall height of the ceramic component (2) in a manner such that the protective fluid (21) rises between the protective fluid conduit (15) and the ceramic component (2), ***characterized in that*** the protective fluid compartment (16) comprises at least one heat exchanger pipe (17-21).

13. The device as claimed in claim 12, ***characterized in that*** the conduit (14) runs through the protective fluid compartment (16) and through the ceramic component (2).

14. The device as claimed in claim 12 or claim 13, ***characterized in that*** the ceramic component (2) comprises one and preferably a plurality of nozzles (10-13).

15. The device as claimed in one of claims 12 to 14, ***characterized in that*** the ceramic component (2) comprises one and preferably a plurality of temperature measurement devices (23).

16. The device as claimed in one of claims 12 to 15, ***characterized in that*** the protective fluid duct (8) comprises a fan (9).

17. The device as claimed in one of claims 12 to 16, ***characterized in that*** the protective fluid compartment (16) comprises cables (22) for measurement devices.

## Revendications

1. Procédé destiné à tirer un conduit (14) dans un incinérateur, lors duquel le conduit (14) est entouré d'un élément en céramique (2), qui est sollicité sur au moins deux côtés opposés par des gaz de fumée, entre le conduit (14) et l'élément en céramique (2), un fluide protecteur (21) étant amené dans un espace (16) pour fluide protecteur, par un conduit (15) de fluide protecteur placé dans l'élément (2) en céramique, qui s'étend à travers l'élément (2) en céramique, et qui à la perpendiculaire à travers l'élément (2) en céramique, mène jusqu'à une zone inférieure de l'élément (2) en céramique, le fluide protecteur (21) y étant amené et montant entre le conduit (15) de fluide protecteur et l'élément (2) en céramique, ***caractérisé en ce que*** l'espace (16) pour fluide protecteur comporte au moins un tube (17 à 20) échangeur thermique.

2. Procédé selon la revendication 1, ***caractérisé en ce que*** le fluide protecteur (21) est amené à l'endroit le plus chaud de l'élément (2) en céramique ou en plusieurs endroits, sur l'ensemble de la hauteur d'encombrement de l'élément (2) en céramique.

3. Procédé selon la revendication 1 ou la revendication 2, ***caractérisé en ce que*** l'élément (2) en céramique est librement accroché dans un carneau (1) de gaz de fumée, de sorte qu'il est sollicité par des gaz de fumée de tous les côtés, à l'exception du côté par lequel il est accroché.

4. Procédé selon l'une quelconque des revendications précédentes, ***caractérisé en ce que*** le conduit (14) est un tube ou un flexible.

5. Procédé selon l'une quelconque des revendications 1 à 3, ***caractérisé en ce que*** le conduit (14) est un conduit électrique.

6. Procédé selon l'une quelconque des revendications précédentes, ***caractérisé en ce que*** le fluide protecteur (21) est un gaz, de préférence de l'air.

7. Procédé selon l'une quelconque des revendications précédentes, ***caractérisé en ce qu***'on amène le fluide protecteur (21) en plusieurs endroits de l'élément (2) en céramique.

8. Procédé selon l'une quelconque des revendications précédentes, ***caractérisé en ce que*** le conduit (14) est tiré à travers le fluide protecteur (21) et l'élément (2) en céramique.

9. Procédé selon l'une quelconque des revendications précédentes, ***caractérisé en ce qu***'on fait passer dans le conduit (14) un milieu pour la dénitruration des gaz de fumée.

10. Procédé selon l'une quelconque des revendications précédentes, ***caractérisé en ce qu**'on* prélève un échantillon de gaz par l'intermédiaire du conduit.

11. Procédé selon l'une quelconque des revendications 1 à 10, ***caractérisé en ce que*** la température dans un espace (16) pour fluide protecteur est réglée par la température du fluide protecteur amené ou **en ce qu'**une température régulée est réglée par des tubes (17 à 20) échangeurs thermiques placés dans l'espace (16) pour fluide protecteur.

12. Dispositif avec un conduit (14), le dispositif comprenant un élément (2) en céramique, lequel entoure le conduit et l'élément en céramique pouvant être sollicité à partir d'au moins deux côtés opposés par des gaz de fumée, entre le conduit (14) et l'élément (2) en céramique étant prévu un espace (16) pour fluide protecteur, l'élément (2) en céramique pouvant être librement accroché dans un carneau (1) pour gaz de fumée, de sorte à pouvoir être sollicité par des gaz de fumée par tous les côtés, à l'exception du côté par lequel il peut être accroché et l'espace (16) pour fluide protecteur comportant une alimentation (8) de fluide protecteur et un conduit (15) pour fluide protecteur qui s'étend à travers l'élément (2) en céramique, pour amener le fluide protecteur (21) à l'endroit le plus chaud de l'élément (2) en céramique ou en plusieurs endroits, sur l'ensemble de la hauteur d'encombrement de l'élément (2) en céramique, de sorte que le fluide protecteur (21) monte entre le conduit (15) de fluide protecteur et l'élément (2) en céramique, ***caractérisé en ce que*** l'espace (16) pour fluide protecteur comporte au moins un tube (17 à 20) échangeur thermique.

13. Dispositif selon la revendication 12, ***caractérisé en ce que*** le conduit (14) mène à travers l'espace (16) pour fluide protecteur et à travers l'élément (2) en céramique.

14. Dispositif selon l'une quelconque des revendications 12 ou 13, ***caractérisé en ce que*** l'élément (2) en céramique comporte une et de préférence plusieurs buses (10 à 13).

15. Dispositif selon l'une quelconque des revendications 12 à 14, ***caractérisé en ce que*** l'élément (2) en céramique comporte un et de préférence plusieurs systèmes (23) de mesure de la température.

16. Dispositif selon l'une quelconque des revendications 12 à 15, ***caractérisé en ce que*** l'amenage (8) de fluide protecteur comporte une soufflante (9).

17. Dispositif selon l'une quelconque des revendications 12 à 16, ***caractérisé en ce que*** l'espace (16) pour fluide protecteur comporte des câbles (22) pour des systèmes de mesure.
